# FASCICULE DE BREVET EUROPEEN

(11) **EP 3 042 709 B1**
(45) Date de publication et mention de la délivrance du brevet: **30.09.2020**
(21) Numéro de dépôt: 15195650.5
(22) Date de dépôt: 20.11.2015
(51) Int. Cl.: B01D 35/153, B01D 35/16, B01D 36/00, B01D 27/08, B01D 35/157

(54) **FILTRE À LIQUIDE PRÉSENTANT UNE ÉTANCHÉITÉ AMÉLIORÉE**
FLÜSSIGKEITSFILTER, DER EINE VERBESSERTE DICHTIGKEIT AUFWEIST
LIQUID FILTER WITH IMPROVED SEALING

(30) Priorité: 07.01.2015 TN 2015000004
(43) Date de publication de la demande: 13.07.2016
(73) Titulaire: Société Tunisienne des Filtres (MISFAT), 1124 Manouba (TN)
(72) Inventeur: GUERMAZI, Mohamed, 1124 MANOUBA (TN); ZAFFATI, Said, 1124 MANOUBA (TN); BRAHMI, Arbi, 1124 MANOUBA (TN)
(74) Mandataire: Cabinet Beau de Loménie

(56) Documents cités:
- EP-A1- 2 181 747
- EP-A1- 2 591 840
- EP-A1- 2 789 375

## Description

### DOMAINE TECHNIQUE GENERAL

La présente invention concerne le domaine des filtres, et plus particulièrement les éléments filtrant, notamment pour une application dans le domaine automobile.

### ETAT DE LA TECHNIQUE

Les filtres utilisant un élément filtrant présentant un média filtrant monté dans une armature comprenant deux flasques recouvrant deux extrémités du média filtrant, et reliés par un élément tubulaire central sont déjà connus.

Lors du montage d'un tel élément filtrant dans une structure de filtre, l'élément filtrant est disposé dans un volume interne délimité par un boitier comprenant une base munie d'un canal de purge du filtre.

Le filtre est ensuite associé à un support, afin de relier le filtre à des conduits d'admission, de refoulement et de purge de liquide, ce support présentant usuellement une tige d'obturation du canal de purge aménagé dans le boitier du filtre.

Or, lors de cette association entre le filtre et le support, on comprend bien que les problématiques de positionnement et d'étanchéité sont primordiales, et garantissent le bon fonctionnement du filtre.
La présence du canal de purge et de la tige d'obturation est à cet égard particulièrement problématique, en ce que ces éléments introduisent des éléments mobiles additionnels, pour lesquels un centrage imprécis ou une étanchéité imparfaite impactent fortement le fonctionnement du filtre.

Des structures de filtres ont été proposées, dans lesquelles les surfaces de guidage et d'étanchéité sont multipliées afin d'assurer le bon fonctionnement du filtre. Les documents EP 2789375 et EP2181747 présentent des exemples de filtres connus. Cependant, de tels filtres sont complexes à réaliser ; la multiplication de telles surfaces de guidage et d'étanchéité entrainant une augmentation importante des contraintes lors de la fabrication.

### PRESENTATION DE L'INVENTION

La présente invention vise à proposer un ensemble comprenant un filtre sensiblement exempt de tels inconvénients.

A cet effet, la présente invention propose un ensemble de filtration comprenant :
- un filtre pour la purification d'un liquide de moteur, ledit filtre comprenant
   - un carter définissant un volume interne, ledit carter comprenant une base, ladite base comprenant un fond opposé à une face ouverte, ledit carter comprenant également et un couvercle adapté pour être disposé sur la face ouverte de ladite base, ledit carter présentant un orifice de purge aménagé dans le fond de la base du carter
   - un élément filtrant disposé dans ledit volume interne du carter, comprenant un flasque inférieur et un flasque supérieur disposés de part et d'autre d'un média filtrant, lesdits flasques inférieur et supérieur définissant un conduit interne de l'élément filtrant,
   - ledit filtre comprend en outre un insert disposé dans le volume interne du carter, entre le fond de la base du carter et l'élément filtrant de manière à former un support dudit élément filtrant,
   - ledit ensemble de filtration comprenant également un support monté sur le couvercle (60) du carter (2), ledit support monté sur le couvercle (60) du carter (2) comprenant une tige de purge adaptée pour sélectivement obturer l'orifice de purge (13) du carter (2)
      l'ensemble étant caractérisé en ce que
   - le flasque inférieur de l'élément filtrant comprend une portion tubulaire s'étendant dans le conduit interne de l'élément filtrant, au-delà du flasque supérieur, adaptée pour être engagée de manière étanche avec ledit support monté sur le couvercle,
- le support monté sur le couvercle du carter comprend un conduit de guidage adapté pour s'engager de manière étanche dans la portion tubulaire du flasque inférieur, et
   - ladite tige de purge est guidée en translation par le conduit de guidage d'une part, et par l'insert d'autre part.
On présente ci-après plusieurs caractéristiques additionnelles d'un tel ensemble, pouvant être prises indépendamment ou en combinaison.

La portion tubulaire du flasque inférieur peut comprendre des nervures s'étendant radialement de manière à réaliser un centrage du flasque supérieure par rapport au flasque inférieur.

Le flasque supérieur peut comprendre une cloison tubulaire s'étendant dans le conduit interne de l'élément filtrant, entre la portion tubulaire du flasque inférieur et le média filtrant, de manière à délimiter
- une chambre à air entre ladite cloison tubulaire et le média filtrant, et
- un conduit de refoulement de fluide entre la cloison tubulaire et la portion tubulaire du flasque inférieur adapté pour permettre le refoulement du liquide du filtre après son passage au travers du média filtrant,
la cloison tubulaire présentant au moins un orifice calibré permettant un dégazage de la chambre à air vers le conduit de refoulement.

Le flasque inférieur et le flasque supérieur sont par exemple chacun formés d'une seule pièce venue de matière.

Le carter présente un orifice de purge aménagé dans son fond, l'insert étant adapté pour réaliser une fonction de centrage et de guidage d'une tige de purge par rapport à l'orifice de purge.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- La figure 1 présente une vue éclatée d'un filtre selon un aspect de l'invention,
- La figure 2 présente une vue en coupe ,
- La figure 3 présente une vue en coupe partielle du filtre, avec le couvercle séparé.

Sur l'ensemble des figures, les éléments en commun sont repérés par des références numériques identiques.

### DESCRIPTION DETAILLEE

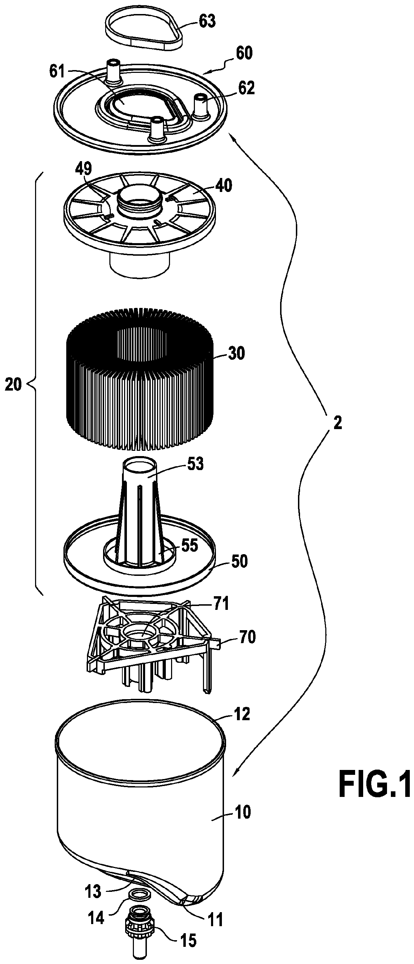

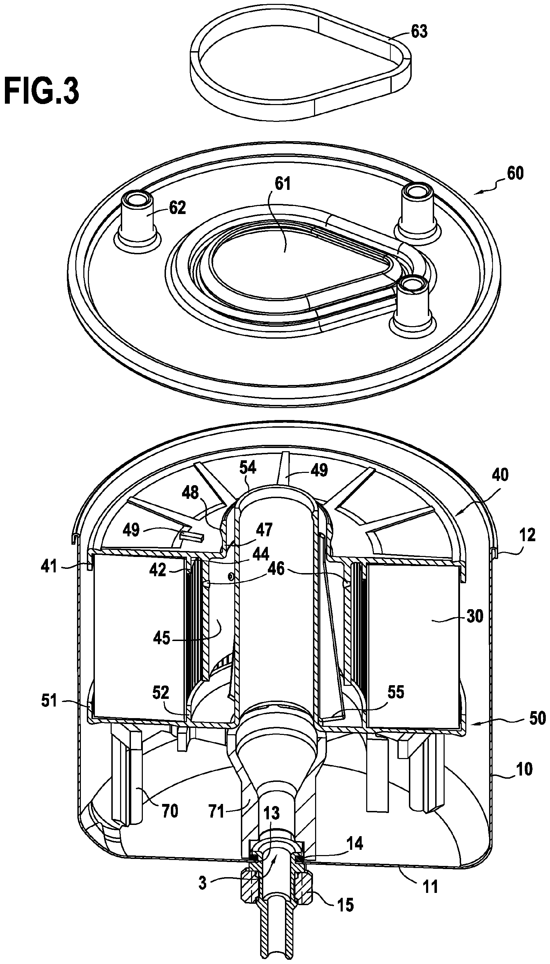

Les figures 1, 2 et 3 présentent plusieurs vues détaillant la structure d'un exemple de filtre selon un aspect de l'invention.

On représente sur ces figures un filtre 1, comprenant
- un carter 2 comprenant une base 10 surmontée d'un couvercle 60, définissant ainsi un volume interne du carter 2 ;
- un élément filtrant 20 disposé dans le carter 2, l'élément filtrant 20 comprenant un média filtrant 30 entouré par un flasque supérieur 40 et un flasque inférieur 50,
- un insert 70 disposé dans le volume interne du carter 2, de manière à former un appui pour l'élément filtrant 20 dans la base 10 du carter 2.

Dans le mode de réalisation représenté, le carter 2 est ainsi formé d'une base 10, définissant un volume interne présentant une portion cylindrique de révolution, et un fond 11 incliné opposé à une extrémité ouverte 12 de la base 10, qui est obturée par le couvercle 60.

La base 10 telle que représentée présente un orifice de purge 13 aménagé dans son fond 11, par lequel une purge du liquide contenu dans le volume interne du carter 2 peut être réalisée.

L'orifice de purge 13 comprend typiquement une bague 14 entourant cet orifice de purge 13, et une buse 15 sertie dans cet orifice de purge 13.

Le couvercle 60 présente quant à lui une ouverture 61 sensiblement en son centre, par laquelle peut s'effectuer l'admission et le refoulement de liquide dans le filtre 1. Le couvercle 60 tel que représenté présente également des plots 62, permettant de réaliser le centrage et la fixation du filtre 1 par rapport à un support (non représenté sur les figures).

L'ouverture 61 du couvercle est typiquement entourée d'un élément d'étanchéité 63, afin de réaliser un montage étanche avec un support.

Comme indiqué précédemment, l'élément filtrant 20 comprend un flasque supérieur 40 et un flasque inférieur 50 entourant un média filtrant 30, ce dernier assurant la fonction de filtration du filtre 1.

Le flasque supérieur 40 et le flasque inférieur 50 présentent chacun une portion ayant une forme générale de disque évidé en son centre, et présentent donc chacun une bordure interne et une bordure externe.
Le flasque supérieur 40 présente une nervure externe 41 de section circulaire s'étendant de sa bordure externe, en direction du flasque inférieur 50, et une nervure interne 42 de section circulaire, avec un diamètre inférieur à celui de la nervure externe 41, s'étendant en direction du flasque inférieur 50 afin de définir un logement entre la nervure interne 42 et la nervure externe 41.
De même, le flasque inférieur 50 présente une nervure externe 51 de section circulaire s'étendant de sa bordure externe, en direction du flasque supérieur 40, et une nervure interne 52 de section circulaire, avec un diamètre inférieur à celui de la nervure externe 51, s'étendant en direction du flasque supérieur 40 afin de définir un logement entre la nervure interne 52 et la nervure externe 51.
Le flasque supérieur 40 et le flasque inférieur 50 sont configurés de manière à ce que leurs nervures interne et externe respectives soient disposées en vis-à-vis lorsque les flasques 40 et 50 sont centrés l'un par rapport à l'autre.

Le média filtrant 30 est ainsi positionné entre les deux flasques 40 et 50, le cas échéant de manière à ce que les nervures internes et externes des flasques entourent l'extrémité inférieur et l'extrémité supérieure du média filtrant 30. Ces nervures interne et externe des flasques supérieur 40 et inférieur 50 permettent notamment de réaliser une fonction de butée pour le média filtrant 30, et contribuent à son maintien en position.

Le flasque inférieur 50 comprend également une portion tubulaire 53 s'étendant dans un conduit interne de l'élément filtrant 20, de manière à s'étendre au-delà du flasque supérieur 40, la portion tubulaire 53 étant adaptée pour être engagée de manière étanche avec un support (non représenté sur les figures) pouvant être associé au couvercle 60.

Cette portion tubulaire 53 définit ainsi un conduit tubulaire interne à l'élément filtrant 20, au travers duquel est typiquement positionnée une tige de purge, adaptée pour sélectivement obturer ou non l'orifice de purge 13, la tige de purge passant alors librement au sein du conduit tubulaire interne, sans interférence.
L'extrémité libre de la portion tubulaire 53 est de plus adaptée pour être assemblée de manière étanche avec un support (non représenté sur les figures), présentant par exemple une portion adaptée pour être insérée dans le conduit tubulaire interne défini par la portion tubulaire 53. Dans le mode de réalisation représenté, l'extrémité libre de la portion tubulaire 53 présente des bossages 54 contribuant à une telle étanchéité.

La portion tubulaire 53 du flasque inférieur 50 a un diamètre strictement inférieur au diamètre interne du flasque supérieur 40, de manière à permettre un passage de liquide autour de la portion tubulaire 53.

Dans le mode de réalisation représenté, le flasque supérieur 40 comprend une cloison tubulaire 43 s'étendant dans le conduit interne de l'élément filtrant, entre la portion tubulaire 53 du flasque inférieur 50 et le média filtrant 30, vers le flasque inférieur 50.

Cette cloison tubulaire 43 ne s'étend pas jusqu'au flasque inférieur 50, et délimite :
- une chambre à air 44 entre la cloison tubulaire 43 et le média filtrant 30, et
- un conduit de refoulement de fluide 45 entre la cloison tubulaire 43 et la portion tubulaire 53 du flasque inférieur 50, permettant notamment le refoulement du liquide du filtre 1 après son passage au travers du média filtrant 30.
En fonctionnement, du fait de la géométrie du filtre 1, l'air présent au sein du liquide filtré va s'accumuler dans la chambre à air 44. Afin de réaliser une évacuation contrôlée de l'air s'accumulant dans la chambre à air 44, la cloison tubulaire 43 présentent au moins un orifice calibré 46 permettant un dégazage de la chambre à air 44 vers le conduit de refoulement.
Les orifices calibrés 46 sont adaptés de manière à limiter le débit de gaz au refoulement du filtre 1, ce qui permet de maitriser la taille des bulles d'air évacuées par le filtre 1.

Dans le mode de réalisation représenté, la portion tubulaire 53 présente des nervures de centrage 55 adaptées pour centrer le flasque supérieur 40 par rapport au flasque inférieur 50, et également pour réaliser une fonction de renfort de la portion tubulaire 53.

Le flasque supérieur 40 présente de plus un embout supérieur 47, s'étendant depuis la bordure interne du flasque supérieur 40, dans une direction opposée au flasque inférieur 50, formant entourant ainsi une partie de la portion tubulaire 53.

Cet embout supérieur 47 est dimensionné de manière à être en saillie par rapport au couvercle 60, afin de pouvoir être logé dans un conduit d'un support (non représenté sur les figures).

L'embout supérieur 47 comprend ainsi typiquement des bossages 48 sur sa surface externe, afin de réaliser une liaison étanche lors de son insertion dans un tel conduit.

Le flasque inférieur 50 et/ou le flasque supérieur 40 sont par exemple réalisés par injection, et sont ainsi typiquement chacun réalisés en une seule pièce venue de matière.

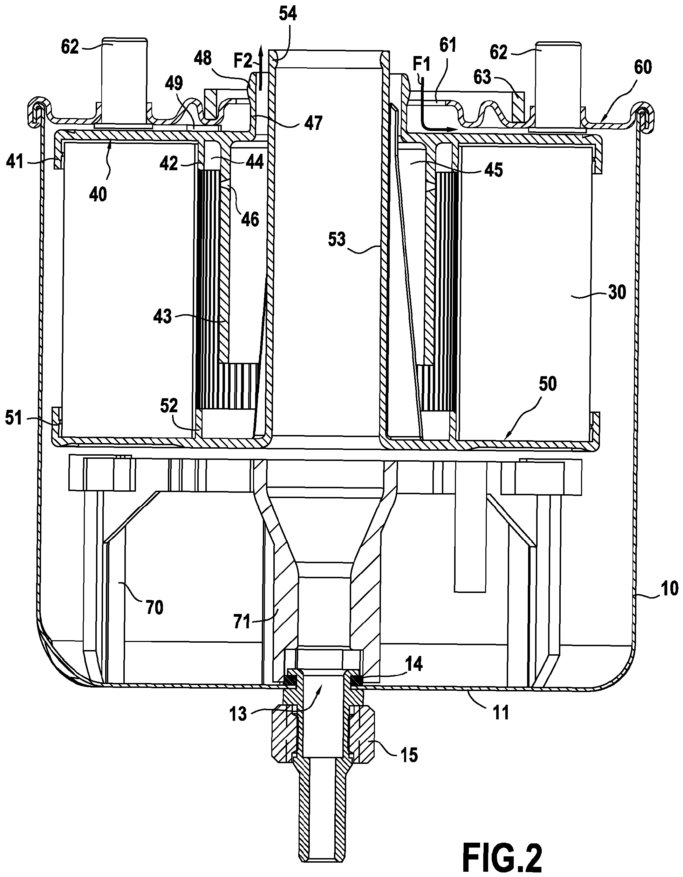

Comme on le voit sur les figures, l'ouverture 61 aménagée dans le couvercle 60 a une dimension supérieure au diamètre de l'embout supérieur 47. Cette ouverture 61 du couvercle 60 définit donc une admission de liquide dans le filtre 1.
On représente ainsi sur la figure 2 par une flèche F1 l'admission de liquide dans le filtre 1, et par une flèche F2 le refoulement de liquide après son passage dans le filtre 1.
La face supérieure du flasque supérieur 40 présente typiquement des butées ou reliefs 49, afin d'assurer un espacement par rapport au couvercle 60, et ainsi permettre l'admission de liquide au sein du volume interne du carter 2.

L'insert 70 présente une portion centrale 71, adaptée pour être alignée avec l'orifice de purge 13 de la base 10 du carter 2.
Cette portion centrale 71 est configurée de manière à réaliser un guidage et un centrage d'une tige de purge venant obturer l'orifice de purge 13 lorsque le filtre 1 est monté sur un support comprenant une telle tige de purge.
La bague 14 disposée autour de l'orifice de purge 13 est typiquement adaptée pour permettre de réaliser un centrage de l'insert 70 par rapport à l'orifice de purge 13.

Le filtre 1 tel que proposé présente ainsi plusieurs avantages.

En premier lieu, la structure proposée permet de limiter les zones d'étanchéité du filtre 1 par rapport à un support
En effet, le filtre 1 tel que proposé permet de monter de manière étanche le conduit de refoulement 45 via deux liaisons étanches, réalisées par l'embout supérieur 47 et par la portion tubulaire 53 respectivement du flasque supérieur 40 et du flasque inférieur 50. Ces deux liaisons étanches assurent ainsi que seul le fluide étant passé au travers du média filtrant 30 puisse passer par le conduit de refoulement 45 du filtre 1.

De plus, lors du montage du filtre 1 sur un support comprenant une tige de purge, l'étanchéité du montage et le centrage ainsi que le guidage de la tige de purge par rapport à l'orifice de purge sont découplés. Ces fonctions sont en effet réalisées par des éléments distincts, ce qui permet de simplifier la fabrication des différents éléments en limitant les contraintes dimensionnelles associées à chaque élément.

Enfin, le filtre 1 proposé permet de réaliser une fonction de dégazage sensiblement constante, assurant ainsi un taux de gaz contrôlé dans le liquide refoulé par le filtre 1.

## Revendications

1. Ensemble de filtration comprenant un filtre (1) pour la purification d'un liquide de moteur, ledit filtre comprenant
- un carter (2) définissant un volume interne, ledit carter (2) comprenant une base (10), ladite base (10) comprenant un fond (11) opposé à une face ouverte (12), et ledit carter (2) comprenant également un couvercle (60) adapté pour être disposé sur la face ouverte (12) de ladite base (10), ledit carter (2) présentant un orifice de purge (13) aménagé dans le fond (11) de la base (10) du carter (2),
- un élément filtrant (20) disposé dans ledit volume interne du carter (2), comprenant un flasque inférieur (50) et un flasque supérieur (40) disposés de part et d'autre d'un média filtrant (30), lesdits flasques inférieur (50) et supérieur (40) définissant chacun un conduit interne de l'élément filtrant (20),
- ledit filtre (1) comprend en outre un insert (70) disposé dans le volume interne du carter (2), entre le fond (11) de la base (10) du carter (2) et l'élément filtrant (20) de manière à former un support dudit élément filtrant (20),
ledit ensemble de filtration comprenant également un support monté sur le couvercle (60) du carter (2), ledit support monté sur le couvercle (60) du carter (2) comprenant une tige de purge adaptée pour sélectivement obturer l'orifice de purge (13) du carter (2)
l'ensemble étant **caractérisé en ce que**
- le flasque inférieur (50) de l'élément filtrant (20) comprend une portion tubulaire (53) s'étendant dans le conduit interne de l'élément filtrant (20), au-delà du flasque supérieur (40), adaptée pour être engagée de manière étanche avec ledit support monté sur le couvercle (60),
- le support monté sur le couvercle (60) du carter (2) comprend un conduit de guidage adapté pour s'engager de manière étanche dans la portion tubulaire (53) du flasque inférieur (50), et
- ladite tige de purge est guidée en translation par le conduit de guidage d'une part, et par l'insert (70) d'autre part.

2. Ensemble selon la revendication 1, dans lequel la portion tubulaire (53) du flasque inférieur (50) comprend des nervures (55) s'étendant radialement de manière à réaliser un centrage du flasque supérieure (40) par rapport au flasque inférieur (50).

3. Ensemble selon l'une des revendications 1 ou 2, dans lequel le flasque supérieur (40) comprend une cloison tubulaire (43) s'étendant dans le conduit interne de l'élément filtrant (20), entre la portion tubulaire (53) du flasque inférieur (50) et le média filtrant (30), de manière à délimiter
- une chambre à air (44) entre ladite cloison tubulaire (43) et le média filtrant (30), et
- un conduit de refoulement (45) de fluide entre la cloison tubulaire (43) et la portion tubulaire (53) du flasque inférieur (50) adapté pour permettre le refoulement du liquide du filtre (1) après son passage au travers du média filtrant (30),
la cloison tubulaire (43) présentant au moins un orifice calibré (46) permettant un dégazage de la chambre à air (44) vers le conduit de refoulement (45).

4. Ensemble selon la revendication 3, dans lequel le flasque inférieur (50) et le flasque supérieur (40) sont chacun formés d'une seule pièce venue de matière.

## Patentansprüche

1. Filterbaugruppe, die einen Filter (1) für die Reinigung einer Motorflüssigkeit umfasst, wobei der Filter umfasst:
- ein Gehäuse (2), das ein Innenvolumen definiert, wobei das Gehäuse (2) eine Basis (10) umfasst, wobei die Basis (10) einen Boden (11) umfasst, der einer offenen Seite (12) entgegengesetzt ist, und das Gehäuse (2) auch eine Abdeckung (60) umfasst, die dazu geeignet ist, auf der offenen Seite (12) der Basis (10) angeordnet zu werden, wobei das Gehäuse (2) eine Entleerungsöffnung (13) aufweist, die in dem Boden (11) der Basis (10) des Gehäuses (2) eingerichtet ist,
- ein in dem Innenvolumen des Gehäuses (2) angeordnetes Filterelement (20), das einen unteren Flansch (50) und einen oberen Flansch (40) umfasst, die auf beiden Seiten eines Filtermittels (30) angeordnet sind, wobei der untere (50) und der obere Flansch (40) jeweils eine innere Leitung des Filterelements (20) definieren,
- wobei der Filter (1) ferner einen Einsatz (70) umfasst, der derart in dem Innenvolumen des Gehäuses (2) zwischen dem Boden (11) der Basis (10) des Gehäuses (2) und dem Filterelement (20) angeordnet ist, dass er eine Stütze des Filterelements (20) bildet,
- wobei die Filterbaugruppe auch eine Stütze umfasst, die an der Abdeckung (60) des Gehäuses (2) montiert ist, wobei die an der Abdeckung (60) des Gehäuses (2) montierte Stütze einen Entleerungsstab umfasst, der dazu geeignet ist, die Entleerungsöffnung (13) des Gehäuses (2) selektiv zu verschließen,
wobei die Baugruppe **dadurch gekennzeichnet ist, dass**
- der untere Flansch (50) des Filterelements (20) einen rohrförmigen Abschnitt (53) umfasst, der sich in der inneren Leitung des Filterelements (20) über den oberen Flansch (40) hinaus erstreckt und der dazu geeignet ist, auf dichte Weise mit der an der Abdeckung (60) montierten Stütze in Eingriff gebracht zu werden,
- die an der Abdeckung (60) des Gehäuses (2) montierte Stütze eine Führungsleitung umfasst, die dazu geeignet ist, auf dichte Weise in den rohrförmigen Abschnitt (53) des unteren Flansches (50) einzugreifen, und
- der Entleerungsstab durch die Führungsleitung auf der einen Seite und durch den Einsatz (70) auf der anderen Seite translatorisch geführt wird.

2. Baugruppe nach Anspruch 1, wobei der rohrförmige Abschnitt (53) des unteren Flansches (50) Rippen (55) umfasst, die sich derart radial erstrecken, dass eine Zentrierung des oberen Flansches (40) in Bezug auf den unteren Flansch (50) ausgeführt wird.

3. Baugruppe nach einem der Ansprüche 1 oder 2, wobei der obere Flansch (40) eine rohrförmige Wand (43) umfasst, die sich derart in der inneren Leitung des Filterelements (20) zwischen dem rohrförmigen Abschnitt (53) des unteren Flansches (50) und dem Filtermittel (30) erstreckt, dass sie abgrenzt:
- eine Luftkammer (44) zwischen der rohrförmigen Wand (43) und dem Filtermittel (30), und
- eine Fluidablassleitung (45) zwischen der rohrförmigen Wand (43) und dem rohrförmigen Abschnitt (53) des unteren Flansches (50), die dazu geeignet ist, das Ablassen der Flüssigkeit des Filters (1) nach ihrer Durchquerung des Filtermittels (30) zu ermöglichen,
- wobei die rohrförmige Wand (43) mindestens eine kalibrierte Öffnung (46) aufweist, die eine Entlüftung der Luftkammer (44) hin zu der Ablassleitung (45) ermöglicht.

4. Baugruppe nach Anspruch 3, wobei der untere Flansch (50) und der obere Flansch (40) jeweils einteilig aus dem gleichen Material gebildet sind.

## Claims

1. A filtration assembly comprising a filter (1) for the purification of an engine liquid, said filter comprising:
- a casing (2) defining an internal volume, said casing (2) comprising a base (10), said base (10) comprising a bottom (11) opposite to an open face (12), and said casing (2) also comprising a cover (60) adapted to be disposed on the open face (12) of said base (10), said casing (2) having a purge orifice (13) arranged in the bottom (11) of the base (10) of the casing (2),
- a filter element (20) disposed in said internal volume of the casing (2), comprising a lower flange (50) and an upper flange (40) disposed on either side of a filter medium (30), said lower (50) and upper (40) flanges each defining an inner duct of the filter element (20),
- said filter (1) further comprises an insert (70) disposed in the internal volume of the casing (2), between the bottom (11) of the base (10) of the casing (2) and the filter element (20) so as to form a support of said filter element (20),
said filtration assembly also comprising a support mounted on the cover (60) of the casing (2), said support mounted on the cover (60) of the casing (2) comprising a purge rod adapted to selectively close off the purge orifice (13) of the casing (2)
the assembly being **characterized in that**
- the lower flange (50) of the filter element (20) comprises a tubular portion (53) extending in the inner duct of the filter element (20), beyond the upper flange (40), adapted to be engaged in a sealed manner with said support mounted on the cover (60),
- the support mounted on the cover (60) of the casing (2) comprises a guide duct adapted to be engaged in a sealed manner in the tubular portion (53) of the lower flange (50), and
- said purge rod is guided in translation by the guide duct on the one hand, and by the insert (70) on the other hand.

2. The assembly according to claim 1, wherein the tubular portion (53) of the lower flange (50) comprises ribs (55) extending radially so as to achieve a centering of the upper flange (40) relative to the lower flange (50).

3. The assembly according to any of claims 1 or 2, wherein the upper flange (40) comprises a tubular partition (43) extending in the inner duct of the filter element (20), between the tubular portion (53) of the lower flange (50) and the filter medium (30), so as to delimit
- an air chamber (44) between said tubular partition (43) and the filter medium (30), and
- a discharge duct (45) for discharging fluid between the tubular partition (43) and the tubular portion (53) of the lower flange (50) adapted to allow discharge of the liquid from the filter (1) after its passage through the filter medium (30),
the tubular partition (43) having at least one calibrated orifice (46) allowing a degassing of the air chamber (44) towards the discharge duct (45).

4. The assembly according to claim 3, wherein the lower flange (50) and the upper flange (40) are each formed in an integral single piece.
